# EUROPÄISCHE PATENTANMELDUNG

(11) **EP 1 213 058 A1**
(43) Veröffentlichungstag der Anmeldung: **12.06.2002**
(21) Anmeldenummer: 01810945.4
(22) Anmeldetag: 28.09.2001
(51) Int. Cl.: B08B 1/00

(54) **Reinigungsvorrichtung**

(30) Priorität: 07.12.2000 CH 24022000
(71) Anmelder: Pudol-Chemie AG, 8200 Schaffhausen (CH)
(72) Erfinder: Keller, Elmar, 8200 Schaffhausen (CH)
(74) Vertreter: Graf, Werner

(57) **Zusammenfassung**

Die Reinigungsvorrichtung (1), insbesondere für Eingabemittel elektronischer Geräte wie Tasten und Tastaturen, ist ausgestaltet als im wesentlichen keilförmigen, geschäumter Körper mit im wesentlichen dreieckförmigem Querschnitt und in Längsrichtung des Körpers verlaufender Kante (1d), wobei der Querschnitt der Kante (1d) einen Winkel β von weniger als 45 Grad umschliesst, und diese Kante eine Hauptreinigungskante (1d) bildet.

## Beschreibung

Die Erfindung betrifft eine Reinigungsvorrichtung gemäss dem Oberbegriff von Anspruch 1.

Heute ist eine Vielzahl elektronischer Geräte im Einsatz, welche als Eingabemittel Tastaturen, Tasten, Schalter oder z.B. eine Bildschirmoberfläche verwenden. Solche Geräte sind beispielsweise Computer oder Schreibmaschinen mit entsprechenden Tastaturen, jedoch auch Telefongeräte, Kopiergeräte, Fernsehgeräte, Fernbedingungen, Computerspielgeräte, oder auch komplexe technische Eingabevorrichtungen wie Flugzeugcockpits, Fahrzeugcockpits von Personenwagen, Automaten, Überwachungsanlagen, oder industriell verwendete Vorrichtungen.

All diesen Eingabemitteln ist gemeinsam, dass sie mit der Zeit verschmutzen. Eine befriedigende Reinigung derartiger Eingabemittel ist aufwendig, und wird daher in der Praxis oft nur oberflächlich oder gar nicht durchgeführt.

Es ist Aufgabe der vorliegenden Erfindung eine Reinigungsvorrichtung, insbesondere für Eingabemittel elektronischer Geräte, vorzuschlagen, welche eine einfache Reinigung erlaubt.

Diese Aufgabe wird gelöst mit einer Reinigungsvorrichtung aufweisend die Merkmale von Anspruch 1. Die Unteransprüche 2 bis 9 betreffen weitere, vorteilhaft ausgestaltete Reinigungsvorrichtungen.

Die Aufgabe wird insbesondere gelöst mit einer Reinigungsvorrichtung ausgestaltet als keilförmiger, geschäumter Körper mit im wesentlichen dreieckförmigem Querschnitt und in Längsrichtung des Körpers verlaufenden Kanten, wobei der Querschnitt der einen Kante einen Winkel β von weniger als 45 Grad umschliesst, und diese Kante eine Hauptreinigungskante bildet.

Unter einem geschäumten Körper wird ein Körper aus einem Schaumstoff wie einem Polyether-Schaumstoff, einem Polyester-Schaumstoff, einem Polyurethan-Schaumstoff oder einem Schaumgummi wie einem Latex-Schaumgummi verstanden.

Die erfindungsgemässe Reinigungsvorrichtung weist den Vorteil auf, dass die Hauptreinigungskante derart geometrisch und derart elastisch ausgestaltet ist, dass die Zwischenräume einer Tastatur, beziehungsweise die seitlichen Flächen benachbart angeordneter Tasten einfach und gründlich gereinigt werden können. Die Länge der Reinigungsvorrichtung ist derart bezüglich der geometrischen Dimension der Tastatur angepasst ausgestaltet, dass die Hauptreinigungskante in den Zwischenraum der Tasten einführbar ist, und eine Querbewegung der Reinigungsvorrichtung in Verlaufsrichtung der Hauptreinigungskante möglich ist. Der spitze Winkel der Hauptreinigungskante sowie die Elastizität beziehungsweise die Stauchhärte des Schaumstoffs sind derart gegenseitig angepasst ausgestaltet, dass der Abschnitt im Bereich der Hauptreinigungskante einen optimalen Reinigungseffekt erzielt, wenn die Hauptreinigungskante entlang des Zwischenraumes der Tastatur bewegt wird.

Durch die Querbewegung der Reinigungsvorrichtung entlang der Tasten kann eine Scheuerwirkung erzeugt werden, welche durch eine entsprechende Wahl von Schaumstoffeigenschaften in einem weiten Bereich variiert werden kann. Insbesondere die Porengrösse und die Elastizität des Schaumstoffes beeinflussen die Scheuerwirkung.

Die erfindungsgemässe Reinigungsvorrichtung weist den Vorteil auf, dass Eingabemittel, insbesondere Tastaturen, sehr einfach und gründlich gereinigt werden können. In einer besonders vorteilhaften Ausgestaltung ist die Reinigungsvorrichtung saugfähig ausgestaltet. Zum Reinigen wird die Tastatur vorgängig mit einer Flüssigkeit besprüht, und danach mit der Reinigungsvorrichtung mechanisch bearbeitet, wobei die Reinigungsvorrichtung sowohl den Schmutz aufnimmt als auch zumindest einen Teil der Flüssigkeit aufsaugt. Dadurch kann auch hartnäckiger, ansonst schwer entfernbarer Schmutz von den Tasten entfernt werden, ohne die Tastatur zu beschädigen. Die Reinigungsvorrichtung erlaubt die sichtbaren Oberflächen jeder Taste gründlich zu reinigen, sodass diese nach dem Reinigen keine Schmutzstellen mehr aufweist. Gerade dieses vollständige Reinigen einer Tastatur war mit den bisher bekannten Mitteln nur sehr aufwendig zu erlangen.

Die erfindungsgemässe Reinigungsvorrichtung ermöglicht beispielsweise auch Ecken, Kanten, Vertiefungen, Spalten oder Schlitze sauber und einfach zu reinigen. Diese geometrischen Ausbildungen können Teil der Eingabemittel sein. Die erfindungsgemässe Reinigungsvorrichtung ist auch zur Reinigung einer Vielzahl weiterer Gegenstände geeignet, welche beispielsweise die genannten geometrischen Ausbildungen aufweisen, so zum Beispiel zur Reinigung von Fahrzeugen wie Autos, Haushaltgegenständen oder Möbeln.

In einer bevorzugten Ausgestaltung weist die Reinigungsvorrichtung nebst der Hauptreinigungskante zwei weitere Kanten auf, wobei jede Kante einen unterschiedlichen Querschnittswinkel aufweist, sodass zur Reinigung eines Gegenstandes wahlweise drei Kanten mit unterschiedlichem Querschnittswinkel zur Verfügung stehen.

Die Erfindung wird nachfolgend an Hand von Ausführungsbeispielen beschrieben. Es zeigen.
- Fig. 1: eine perspektivische Ansicht einer Reinigungsvorrichtung;
- Fig. 2: einen Querschnitt durch die Reinigungsvorrichtung;
- Fig. 3: eine Detailansicht eines weiteren Ausführungsbeispiels einer Hauptreinigungskante;
- Fig. 4: die Reinigung einer Tastatur;
- Fig. 5: einen Querschnitt durch eine weitere Reinigungsvorrichtung.

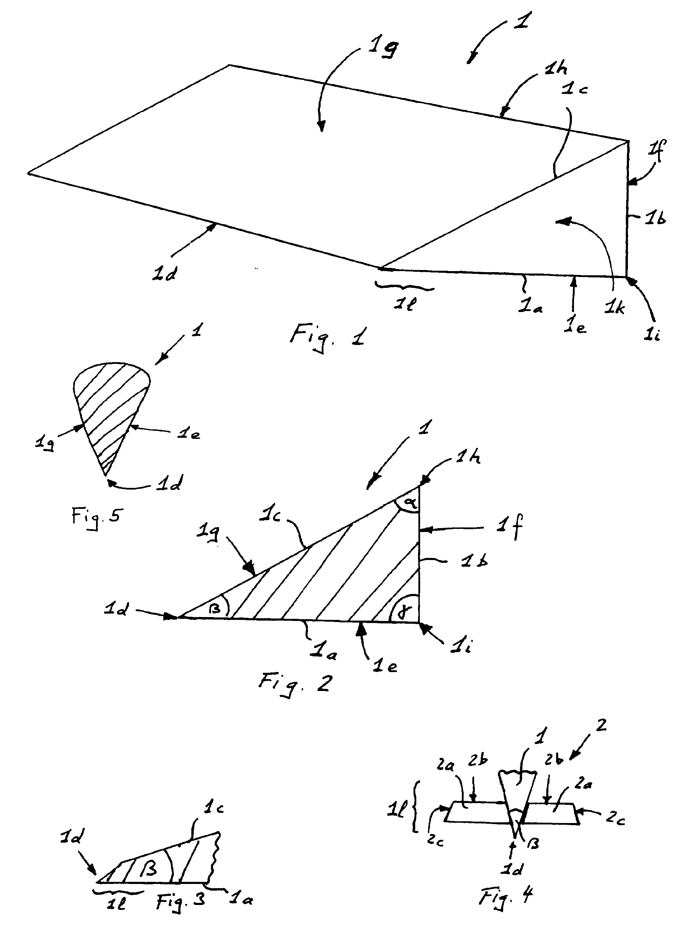

Die perspektivische Ansicht gemäss Fig. 1 zeigt die keilförmig ausgestaltete Reinigungsvorrichtung 1 mit in deren Längsrichtung verlaufenden Kanten 1d, 1h, 1i, einer ersten Seitenfläche 1e, einer zweiten Seitenfläche 1f, einer dritten Seitenfläche 1g sowie einer Stirnfläche 1k.

Fig. 2 zeigt einen senkrecht zur Kante 1d verlaufenden Querschnitt durch die Reinigungsvorrichtung 1 gemäss Fig. 1. Die den Querschnitt begrenzenden Linien der Reinigungsvorrichtung 1 sind als Seitenkanten 1a, 1b, 1c dargestellt. Der Querschnitt durch die Kante 1d ist durch die Seitenkanten 1a, 1c begrenzt und umschliesst einen Winkel β von weniger als 45 Grad. Diese Kante 1d wird als eine Hauptreinigungskante 1d bezeichnet, weil sie besonders optimal zur Reinigung von Eingabemitteln, insbesondere Tastaturen, ausgestaltet ist.

Fig. 4 zeigt in einer Seitenansicht einen Ausschnitt einer Tastatur 2 mit zwei benachbart angeordneten Tasten 2a mit Oberflächen 2b und Seitenflächen 2c. Die Reinigungsvorrichtung 1 ist derart bezüglich der Anordnung der Tasten 2a angepasst ausgestaltet, dass zumindest die Hauptreinigungskante 1d zwischen die Seitenflächen 2c benachbart angeordneter Tasten 2a einführbar ist. Die Reinigungsvorrichtung 1 wird in zur Betrachtungsebene gemäss Fig. 4 vertikaler Richtung zwischen den Tasten 2a bewegt beziehungsweise hindurchgezogen, sodass zumindest die Seitenflächen 2c der Tasten 2a optimal gereinigt werden können.

Durch eine entsprechende Wahl der Geometrie sowie durch eine entsprechende Wahl des Materials des geschäumten Körpers kann die Reinigungswirkung der Reinigungsvorrichtung 1 entsprechend beeinflusst werden. Die Geometrie und das Material wird vorzugsweise derart gewählt, dass mit den sich im Bereich der Hauptreinigungskante 1d befindlichen Teilabschnitten 1l der ersten und dritten Seitenfläche 1e, 1g eine optimale Reinigungswirkung auf die Tasten 2a, insbesondere auf deren Seitenflächen 2c erzielt wird. Der Teilabschnitt 1l darf nicht zu weich ausgestaltet sein, weil sonst insbesondere die vom Teilabschnitt 1l auf die Tasten 2a bewirkten Reibungskräfte zu gering ausfallen würden, und/oder die Hauptreinigungskante 1d zu tief zwischen den Tasten 2a einsinken würde. Der Teilabschnitt 1l sollte zudem derart ausgestaltet sein, dass die gesamte Seitenfläche 2c gereinigt werden kann. Ist der Schaumstoff beispielsweise nicht genügend elastisch, so kann sich der Teilabschnitt 1l nicht an die gesamte Seitenfläche 2c anschmiegen, sodass ein Teil der Seitenfläche 2c nicht gereinigt werden könnte.

Nebst der geometrischen Ausgestaltung des Teilabschnittes 1I sind von den Materialeigenschaften des Schaumstoffes insbesondere die Grössen Stauchhärte und Raumgewicht von Bedeutung zur Erzielung eines vorteilhaften Reinigungseffektes.

Die optimale Ausgestaltung der Reinigungsvorrichtung ist natürlich abhängig von der jeweiligen Geometrie des zu reinigenden Gegenstandes. Zur Reinigung von Tastaturen wie Computertastaturen, welche eine weitgehend genormte Geometrie aufweisen, kann die erfindungsgemässe Reinigungsvorrichtung 1 vorzugsweise wie folgt ausgestaltet sein:

Der Winkel β ist kleiner als 45 Grad, beträgt vorzugsweise zwischen 30 und 40 Grad, und insbesondere etwa 35 Grad. Die Reinigungsvorrichtung 1 besteht aus einem Polyether-, Polyester- oder Polyurethanschaumstoff, oder einem Latexschaumgummi. Der Schaumstoff weist ein Raumgewicht zwischen 50 und 100 kg/m³ auf, vorzugsweise etwa 65 kg/m³. Der Schaumstoff weist eine Stauchhärte (nach DIN 53577) zwischen 5 und 30, vorzugsweise etwa 14 kPa/40% auf. Der Schaumstoff weist eine Elastizität (nach DIN 53573) zwischen 40% und 60%, vorzugsweise etwa 40% auf.

Die Reinigungsvorrichtung 1 weist vorzugsweise eine Länge zwischen 5 und 15 cm auf, insbesondere eine Länge von 10 cm. Diese Länge ermöglicht mit der Reinigungsvorrichtung 1 auf einer Computertastatur eine Längsbewegung entlang den Tasten 2 auszuführen.

Der Schaumstoff kann beispielsweise eine Dehnung von etwa 195 % (nach DIN 53571) sowie eine Reissfestigkeit von etwa 200 kPa (nach DIN 53571) aufweisen.

Der weitere Winkel γ der Reinigungsvorrichtung 1 beträgt in einer bevorzugten Ausführungsform 90 Grad und somit der Winkel α die Differenz zwischen 90 Grad und dem Winkel β. Die derart ausgestaltete Reinigungsvorrichtung 1 weist den Vorteil auf, dass zur Reinigung eines Gegenstandes Reinigungskanten mit verschieden grossen Winkeln zur Verfügung stehen. So kann es sich zur Reinigung eines Randbereiches einer Tastatur oder einer Instrumententafel als vorteilhaft erweisen, dass der eine Winkel 90 Grad beträgt. Auch die Seitenkanten 1a,1b,1c können als Reinigungskanten verwendet werden, sodass die Reinigungsvorrichtung 1 eine Mehrzahl unterschiedlich langer und/oder mit unterschiedlichen Querschnittswinkeln versehene Reinigungskanten aufweist.

Zumindest eine der Reinigungskanten 1d, 1h, 1i könnte auch abgerundet ausgestaltet sein. Zumindest eine der Reinigungskanten 1d, 1h, 1i könnten auch, wie in Fig. 3 in einem Querschnitt der Hauptreinigungskante 1d dargestellt, gebrochen beziehungsweise kupiert ausgestaltet sein. Die in Fig. 3 dargestellte Ausgestaltung der Hauptreinigungskante 1d kann sich als vorteilhaft erweisen, um beispielsweise die Eindringtiefe der Reinigungsvorrichtung 1 zu begrenzen, oder um dem Teilabschnitt 1l eine vorteilhafte Steifigkeit zu verleihen.

Die gesamte Reinigungsvorrichtung 1 kann aus demselben Material bestehen und insbesondere aus einem homogenen Material bestehen, das heisst einem Material mit durchgängig gleichen Eigenschaften. Die Reinigungsvorrichtung 1 kann auch aus unterschiedlichen Materialien bestehen, indem beispielsweise der in Fig. 1 dargestellte keilförmige Körper fest mit einem Handgriff aus hartem Kunststoff verbunden ist.

Die erfindungsgemässe Reinigungsvorrichtung 1 wird vorzugsweise zur Reinigung von Eingabemitteln elektronischer Geräte wie Tastaturen verwendet. Dazu wird insbesondere die Hauptreinigungskante 1d zwischen den Tasten 2a hin- und herbewegt.

Der Schaumstoff ist vorzugsweise offenporig ausgestaltet. Vorteilhafterweise kann der sich während dem Reinigen im Schaumstoff angelagerte Schmutz zum Beispiel mit Wasser wieder ausgewaschen werden.

Die im wesentlichen keilförmige Reinigungsvorrichtung 1 kann beispielsweise im Bereich der zweiten Seitenfläche 1f in unterschiedlicher Weise ausgebildet sein, und muss nicht, wie in Fig. 1 dargestellt, eben beziehungsweise keilförmig die erste oder dritte Seitenfläche 1e,1g treffend ausgestaltet sein. Zur Reinigung von Eingabemitteln wie Tastaturen genügt es beispielsweise, wenn die Hauptreinigungskante 1d der Reinigungsvorrichtung 1 wie dargestellt ausgestaltet ist, wogegen die zweite Seitenfläche 1f auch anders ausgestaltet sein könnte, beispielsweise wie in Fig. 5 dargestellt halbkreisförmig, sodass die dritte Seitenfläche 1g über die nun im wesentlichen halbkreisförmige Fläche 1f in die erste Seitenfläche 1e übergeht.

Es kann sich als vorteilhaft erweisen ein zusätzliches Reinigungsmittel wie ein Tuch zu verwenden, welches zumindest teilweise auf der Reinigungsvorrichtung 1 aufliegt, sodass das zusätzliche Reinigungsmittel mit dem zu reinigenden Gegenstand in Berührung kommt. So könnte beispielsweise auf der Oberfläche der in Figur 4 dargestellten Reinigungsvorrichtung 1 ein Tuch, beispielsweise einem Mikrofasertuch, aufliegen, sodass dieses Tuch auf der Seitenfläche 2c der Tasten 2a aufliegt und die reinigende Wirkung erzielt. Dadurch kann das Tuch optimal auf den zu reinigenden Gegenstand einwirken.

Die Reinigung kann in einem vorteilhaften Verfahren derart erfolgen, dass der zu reinigende Gegenstand vorerst mit einer Flüssigkeit befeuchtet wird, danach unter einziger Verwendung der Reinigungsvorrichtung 1 bearbeitet wird, und danach unter Verwendung der Reinigungsvorrichtung 1 in Kombination mit dem Tuch poliert und gegebenenfalls getrocknet wird.

## Patentansprüche

1. Reinigungsvorrichtung (1), insbesondere für Eingabemittel elektronischer Geräte wie Tasten und Tastaturen, ausgestaltet als im wesentlichen keilförmiger, geschäumter Körper mit im wesentlichen dreieckförmigem Querschnitt und in Längsrichtung des Körpers verlaufender Kante (1d), wobei der Querschnitt der Kante (1d) einen Winkel β von weniger als 45 Grad umschliesst, und diese Kante eine Hauptreinigungskante (1d) bildet.

2. Reinigungsvorrichtung (1) nach Anspruch 1, **dadurch gekennzeichnet, dass** der Winkel β zwischen 30 und 40 Grad beträgt, insbesondere 35 Grad.

3. Reinigungsvorrichtung (1) nach einem der vorhergehenden Ansprüche, **dadurch gekennzeichnet, dass** diese aus einem Polyether-, Polyesteroder Polyurethanschaumstoff besteht, oder aus einem Latexschaumgummi.

4. Reinigungsvorrichtung (1) nach einem der vorhergehenden Ansprüche, **dadurch gekennzeichnet, dass** diese ein Raumgewicht zwischen 50 und 100 kg/m³, insbesondere von 65 kg/m³ aufweist.

5. Reinigungsvorrichtung (1) nach einem der vorhergehenden Ansprüche, **dadurch gekennzeichnet, dass** diese eine Stauchhärte zwischen 5 und 30 kPa, insbesondere von 14 kPa aufweist.

6. Reinigungsvorrichtung (1) nach einem der vorhergehenden Ansprüche, **dadurch gekennzeichnet, dass** diese eine Länge zwischen 5 und 15 cm aufweist, insbesondere von etwa 10 cm.

7. Reinigungsvorrichtung (1) nach einem der vorhergehenden Ansprüche, **dadurch gekennzeichnet, dass** der dreieckförmige Querschnitt drei unterschiedliche Winkel, und insbesondere einen rechten Winkel γ aufweist.

8. Reinigungsvorrichtung (1) nach einem der vorhergehenden Ansprüche, **dadurch gekennzeichnet, dass** der dreieckförmige Querschnitt Seitenlängen zwischen 3 cm und 7 cm aufweist.

9. Reinigungsvorrichtung (1) nach einem der vorhergehenden Ansprüche, **dadurch gekennzeichnet, dass** die Hauptreinigungskante (1d) gebrochen oder abgerundet ist.

10. Verwendung einer Reinigungsvorrichtung (1) nach einem der vorhergehenden Ansprüche zur Reinigung von Eingabemitteln elektronischer Geräte, insbesondere Tastaturen (2) und Tasten (2a), indem die Hauptreinigungskante (1d) zwischen den Tasten (2a) bewegt wird.
